# EUROPEAN PATENT SPECIFICATION

(11) **EP 4 178 812 B1**
(45) Date of publication and mention of the grant of the patent: **27.03.2024**
(21) Application number: 21745422.2
(22) Date of filing: 02.07.2021
(51) Int. Cl.: B60C 11/03, B60C 11/12

(54) **CAR TYRE**
FAHRZEUGREIFEN
PNEU D'AUTOMOBILE

(30) Priority: 09.07.2020 IT 202000016684
(43) Date of publication of application: 17.05.2023
(73) Proprietor: Pirelli Tyre S.p.A., 20126 Milano (IT)
(72) Inventor: DUPRÉ, Giulio Lorenzo, 20126 Milano (IT); BOLZONI, Roberto, 20126 Milano (IT); SPEZIARI, Diego Ettore, 20126 Milano (IT); PUTTI, Alberto Maria, 20126 Milano (IT)
(74) Representative: Fabiano, Piero
(86) International application number: PCT/IB2021/055947
(87) International publication number: WO 2022/009042

(56) References cited:
- EP-A1- 2 151 333
- EP-A1- 2 177 378
- EP-A1- 2 204 294
- WO-A1-2019/111089
- DE-A1-102008 015 978
- US-A1- 2002 139 460

## Description

### Field of the invention

The present invention relates to a car tyre, particularly to an "all season" tyre suitable for fitting to SUVs and/or Crossovers.

### Prior art

The following documents disclose some examples of car tyres: EP31577764, EP2357095, EP1189770, EP2151333, WO2019/111089.

### Summary of the invention

So-called "all season" tyres are suitable for use in both winter and summer, and because of this special feature, which does not compel the user to have two sets of dedicated tyres, each suitable for a specific season, they are very popular and in demand among users.

To meet this requirement, this type of tyre is generally required to have a very flexible behavior, which should enable it to provide performance comparable to summer tyres in summer and to winter tyres in winter.

The Applicant noted that in order to have features comparable to so-called winter tyres, "all season" tyres should have a tread characterized by a high number of grooves or recesses and by a greater depth thereof, as compared to a common summer tyre.

The Applicant further noted that, similar to winter tyres, "all season" tyres may be characterized by the presence of a dense siping, which, particularly when the tyre rolls on snow-covered roads, increases the tyre grip on this type of surface, because small amounts of snow are captured into the sipes and friction is increased by the contact of snow against snow.

SUVs and Crossovers are generally large, powerful and heavier cars than saloon cars or station wagons, and often require tyres having significant dimensions in terms of nominal section widths and fitting diameters.

Tyres for SUVs and Crossovers may have, for example, nominal section widths of 275, 295 or more, and fitting diameters of 18 inches or more. The use of wide tyres with larger fitting diameters gives vehicles a sporty look and behavior and may also significantly increase driving safety on a dry surface, particularly when cornering at high speed.

A large tyre size, which is necessarily required in this type of application due to the high loads to which the tyres are subjected, results in large moving masses when the tyres roll, and consequently in more critical tyre wear control.

The Applicant noted that generally, in order to affect the tyre performance, it is desired that in the area where the tyre contacts the ground (footprint area) there is as much rubber as possible on the ground, i.e. areas with a low void-to-rubber ratio are provided. This is clearly in contrast to the requirement of "all season" tyres to have a high number of grooves, recesses and/or sipes.

For example, in an attempt to achieve a low void-to-rubber ratio in the footprint area, it is known to provide substantially "slick" circumferential ribs, i.e. circumferential ribs that are substantially free of grooves or sipes, in the most central portion of the tread band.

However, by means of an in-depth study of the interaction between tyre and rolling surface, the Applicant has noted that providing ribs substantially lacking grooves or sipes in the central portion of the tread band, adjacent to tread band portions characterized by a high number of grooves and sipes, may lead to an imperfect distribution of the contact pressures in the footprint area when the tyre is rolling, thus triggering phenomena of early and/or irregular wear and, as a consequence, reducing the tyre life.

The issue of wear is particularly felt, both at a general level due to a widespread increase in collective awareness of environmental issues, and at a level of the individual consumer/customer, who expects a certain durability from their product. In certain markets, such as for example the US market, tyre manufacturers and/or distributors are often required to guarantee a certain level of durability. It is therefore of paramount importance to develop products that reduce the occurrence of early and/or irregular wear as much as possible, so as to avoid putting products with excessively low service life on the market and/or claims by end customers.

In view of the above, it is clear that "all season" tyres, especially for particularly heavy cars such as SUVs and Crossovers, shall meet conflicting requirements in order to provide good performance in all different road and weather conditions.

The Applicant has therefore faced the problem of providing "all season" tyres, in particular for SUVs and Crossover, capable of ensuring long mileage, high performance levels, braking and traction, without at the same time reducing drainage, driving safety on wet grounds and handling, driving safety on snow-covered grounds.

The Applicant has concentrated its efforts on solving this problem and has manufactured a tyre having a tread band provided with a plurality of regularly arranged sipes, with a wide central region free of circumferential annular portions having a low void-to-rubber ratio arranged adjacent to central annular portions having a medium or high void-to-rubber ratio, as well as with three rows of blocks, at least two of which having transverse grooves only slightly inclined relative to a direction perpendicular to the equatorial plane.

In a first aspect thereof, the invention relates to a car tyre having a tread band comprising a central region, extending across an equatorial plane, and two shoulder regions, separated from the central region by two first circumferential grooves.

The central region has at least one central rib, comprising a plurality of central blocks, and at least two rows of lateral blocks opposed to each other relative to said central rib and comprising a plurality of lateral blocks.

The central rib is axially delimited by two second circumferential grooves and said plurality of central blocks is delimited by a respective plurality of first curvilinear grooves.

Each first curvilinear groove extends between a second circumferential groove and a circumferentially subsequent first curvilinear groove, so as to form one of the central blocks.

The lateral blocks of each row of lateral blocks are separated from one another by means of a plurality of second curvilinear grooves distributed along the whole circumferential development of the tyre and have an extension equal to at least 95% of the width of the respective row of lateral blocks.

Each of said second curvilinear grooves comprises a substantially straight first segment inclined relative to a direction parallel to the equatorial plane of the tyre so as to form an angle θ greater than or equal to 45°, a substantially straight second segment oppositely inclined relative to the first segment, and a curvilinear connecting segment extending between the first and the second segments.

The tread band further comprises a plurality of sipes comprising a plurality of first sipes located in the central rib between the first curvilinear grooves and one of the second circumferential grooves.

The Applicant has proven that the substantial absence of circumferential annular portions having a low void-to-rubber ratio in the central region reduces variations in stiffness and contact pressure within the footprint area of the tread band in axial direction, thus limiting the occurrence of phenomena of excessive local dissipation of thermal energy due to sliding while the tyre is rolling, and making the wear behavior uniform, to the advantage of long mileage.

Moreover, the presence of a siping, in particular with a regular and homogeneous distribution, acts synergistically with the reduced stiffness variation of the adjacent annular portions of the tread band, further improving mileage and allowing good drainage and good behavior on snow to be achieved.

Finally, the presence of transverse grooves having a significant extension and only slightly inclined relative to a direction perpendicular to the equatorial plane, allows good traction and braking features to be achieved, while limiting the noise of this type of recesses.

For the purposes of the present invention, the following definitions apply:
By "tread pattern" it is meant the representation of all points of the tread band (including recesses) in a plane perpendicular to the equatorial plane of the tyre and tangential to the maximum diameter of the tyre.

The measurements of angles and/or linear quantities (distances, widths, lengths, etc.) and/or surfaces are to be intended as referring to the tread pattern as defined above.

Furthermore, considering the angular arrangement of the grooves, recesses and/or sipes (or segments of grooves, recesses and/or blades) formed in the tread band relative to the equatorial plane of the tyre, such angular arrangement shall be understood, for each point of the groove, as referring to the acute angle (i.e. comprised between 0° and 90° in absolute value) defined by a rotation starting from the equatorial plane to the direction tangent to the groove, recess or sipe (or a segment thereof) passing through that point. Furthermore, the angular arrangement is to be understood with reference to an overall course of the groove, recess or sipe (or a segment thereof). For example, in the case of sipes or sipe segments having a zigzagging course, the angular arrangement is to be intended as referring to the average inclination of the sipe or sipe segment having the zigzagging course.

By the term "equatorial plane" of the tyre it is meant a plane perpendicular to the rotation axis of the tyre and dividing the tyre into two substantially equal portions.

By "circumferential" direction it is meant a direction generally directed according to the rotation direction of the tyre, or slightly inclined (e.g. by about 20° at most) relative to the rotation direction of the tyre.

By "axial" direction it is meant a direction substantially parallel to the rotation axis of the tyre, or slightly inclined (e.g. by about 20° at most) relative to the rotation axis of the tyre. Generally, the axial direction is substantially perpendicular to the circumferential direction.

By the term "effective width" referred to the tread band it is meant the width of the radially outermost portion of the tread band (from one edge to the other) intended to contact the ground.

By the term "groove" it is meant a recess formed in a portion of the tread band, having a width greater than or equal to 1.5 mm and preferably a depth greater than 3 mm.

By the term "sipe" it is meant a recess formed in a portion of the tread band, having a width smaller than 1.5 mm, preferably smaller than or equal to 1 mm, substantially along its whole extension. Typically, at the radially outer surface of the tread band, a sipe has an extension greater than its width. Preferably, at the radially outer surface of the tread band, a sipe has an extension greater than or equal to 3 mm.

In general, the function of the sipes is to provide further grip elements, in addition to the grooves, when driving on snow-covered surfaces and to retain a certain amount of snow, thus improving grip to the road surface.

The width of sipes and grooves shall be measured on a new tyre, at or near the radially outer surface of the tread band.

By "void-to-rubber ratio" it is meant the ratio between the total surface area of the grooves in a given portion of the tread band (possibly of the whole tread band) and the total surface area of the given portion (possibly of the whole tread band).

The present invention, in one or more preferred aspects thereof, may comprise one or more of the features presented hereinafter.

Preferably, the second curvilinear grooves may extend over 100% of the width of the respective row of lateral blocks.

Conveniently, the rows of lateral blocks may lack annular portions having a void-to-rubber ratio equal to zero.

Advantageously, the central rib may lack annular portions having a void-to-rubber ratio equal to zero.

Preferably, the second segment of the second curvilinear grooves may have an extension smaller than or equal to 1/3 of the extension of the first segment.

Conveniently, the angle formed between the first segment of the second grooves and a direction parallel to the equatorial plane is comprised between 50° and 80°, preferably between 50° and 70°.

Preferably, the central rib may comprise an annular portion having a void-to-rubber ratio greater than 0.05.

Advantageously, such annular portion may be delimited in axial direction by one of the second circumferential grooves and by the plurality of first curvilinear grooves.

Conveniently, such annular portion comprises the plurality of first sipes.

Preferably, the void-to-rubber ratio of such annular portion may result from the first sipes alone.

Advantageously, the first sipes may extend with a substantially straight course between the second circumferential groove and the first curvilinear grooves.

Conveniently, the first sipes are inclined relative to the equatorial plane so as to form an angle greater than 45°, preferably comprised between 50° and 80°, more preferably between 50° and 70°.

Preferably, the first curvilinear grooves may comprise a substantially straight first segment inclined relative to a direction parallel to the equatorial plane so as to form an angle greater than 45°, preferably comprised between 50° and 80°, more preferably between 50° and 70°.

Advantageously, the first curvilinear grooves comprise a curvilinear second segment, arranged in a substantially circumferential direction.

Preferably, the central blocks comprise a plurality of second sipes.

Conveniently, at least some of the second sipes my extend in the central blocks between one of the second circumferential grooves and the first curvilinear circumferential grooves.

Advantageously, the second sipes are inclined relative to the equatorial plane so as to form an angle greater than 45°, preferably comprised between 50° and 80°, more preferably between 50° and 70°; the second sipes may be oppositely inclined relative to the first sipes.

Preferably, in each central block at least some of the second sipes may have a central segment having a zigzagging course.

Conveniently, one of the rows of lateral blocks may comprise a plurality of third sipes and another of the rows of lateral blocks may comprise a plurality of fourth sipes.

Preferably, the third sipes may extend substantially parallel to one another, even more preferably in a direction substantially parallel to the direction of the first segment of the second curvilinear grooves of the respective row of lateral blocks.

Conveniently, the fourth sipes may extend substantially parallel to one another, more preferably in a direction substantially to the direction of the second sipes. Preferably, the fourth sipes may extend in a direction oppositely inclined relative to the direction of the straight first segment of the second curvilinear grooves of the respective row of lateral blocks.

Advantageously, in each lateral block at least some of the fourth sipes may have a central segment having a zigzagging course.

Conveniently, the second, third and fourth sipes may have a variable depth along their extension and at least one depth reduction at at least one of their ends.

Advantageously, the first and second shoulder regions comprise rows of shoulder blocks separated from one another by shoulder transverse grooves. Preferably, the shoulder transverse grooves have a width greater than or equal to 3 mm.

Preferably, one of the rows of shoulder blocks may comprise a plurality of fifth sipes; the other of said rows of shoulder blocks may comprise a plurality of sixth sipes.

Conveniently, the fifth and/or the sixth sipes may extend substantially parallel to one another, more preferably substantially parallel to the extension direction of said the shoulder transverse grooves.

Preferably, pairs of circumferentially consecutive sipes of each plurality of sipes do not have mutual intersection points and are arranged at a minimum distance greater than or equal to 6 mm in circumferential direction.

Advantageously, the first and second circumferential groves may have a width smaller than 15 mm, preferably smaller than 14 mm.

Conveniently, the first curvilinear grooves have a width greater than 2 mm.

Preferably, the first curvilinear grooves have a width smaller than or equal to about 5 mm, more preferably smaller than or equal to 4 mm.

Conveniently, the second curvilinear grooves have a width greater than 2 mm. Preferably, the second curvilinear grooves have a width smaller than or equal to about 5 mm, more preferably smaller than or equal to 4 mm.

Preferably, the first segments of the first curvilinear grooves may be substantially aligned with the first segments of the second curvilinear grooves.

Conveniently, the third sipes may be oppositely inclined relative to the fourth sipes.

Preferably, in a row of lateral blocks the curvilinear connecting segment of the second grooves connects the first segment with the second segment so as to define a concavity oriented in a first circumferential direction, whereas in the remaining row of lateral blocks the curvilinear connecting segment connects the first segment with the second segment so as to define a concavity oriented in a second circumferential direction opposite to said first circumferential direction.

Further features and advantages of the invention shall become clearer from the detailed description of some preferred, although not exclusive, embodiments of an "all season" tyre, particularly for SUVs and Crossovers, according to the present invention.

### Brief description of the drawings

Such description shall be made hereafter with reference to the accompanying drawings, provided only for indicating, and thus non-limiting, purposes, wherein:
- figure 1 shows a perspective view of a first example of a tyre according to the invention;
- figure 2 is an enlarged view of a cross-section of the tyre of figure 1;
- figure 3 is a schematic plan view of a tread band portion of the tyre of figure 1.

### Detailed description of embodiments of the invention

With reference to the attached figures, an "all season" tyre for SUV and Crossover wheels is generally indicated by reference numeral 1.

The structure of the tyre 1 is by itself of a conventional type and comprises a carcass, a tread band 7 placed in crown to the carcass, a pair of axially opposed sidewalls, ending in beads reinforced by bead cores and associated bead fillers. The tyre preferably also comprises a belt structure interposed between the carcass and the tread band. The carcass comprises one or more carcass plies anchored to the bead cores, while the belt structure comprises two belt strips radially superimposed to each other. The belt strips are formed of pieces of a rubberized fabric incorporating metal cords parallel to one another in each strip and having a crossed orientation, preferably with a symmetrical inclination relative to the equatorial plane, relative to the cords of adjacent strips. Preferably, the belt structure also comprises, in a radially outermost position, a third belt strip provided with cords oriented substantially parallel to the equatorial plane. Preferably, although not necessarily, the tyre according to the invention has a nominal section width of at least about 225, more preferably of at least about 245. For example, the tyre may have a nominal section width of 225, 245, 275, 295. Preferably, the tyre according to the invention has a reduced section height. For example, the section height may be smaller than or equal to 60%, more preferably smaller than or equal to 50%, of the nominal section width.

The tyre 1 preferably has an H/C ratio between the height H of the straight section and the maximum section width C comprised between 0.25 and 0.60.

In order to ensure long mileage and, at the same time, high performance throughout the entire life of the tyre, particularly with regard to handling on wet and snow-covered grounds, the tread band 7 has an overall void-to-rubber ratio greater than 25%, preferably greater than 29%.

Preferably, the overall void-to-rubber ratio of the tread 7 is smaller than 36%, more preferably smaller than 34%.

Preferably, although not necessarily, the tyre according to the invention is of the asymmetrical type, in other words the pattern of the tread band 7 of the tyre on the right of the equatorial plane X-X is substantially different from that on the left. The tyre 1 and/or the tread band 7 therefore has an inner side to be arranged, when fitted, preferably towards the inside of the vehicle (on the right in the example shown in the figures) and an outer side to be arranged preferably towards the outside of the vehicle (on the left in the example shown in the figures).

The tread band 7 is provided with four circumferential grooves, respectively two first 2,3 and two second 4,5 circumferential grooves, extending in a substantially circumferential direction. The first circumferential grooves 2 and 3 separate a central region L1 of the tread band 7 from two shoulder regions L2 and L3 of the tread band 7, respectively located to the left and to the right of the central region L1.

The central L1 region is crossed by the equatorial X-X plane of the tyre. The shoulder regions L2 and L3 extend close to the axial ends of tread band 1.

Although not represented by clearly recognizable edges, the ends of the tread 7 may be defined by the intersection of extensions, in a substantially axial direction, of the radially outermost portion of the tread 7 and extensions, in a substantially radial direction, of the axially outermost portions of the tread 7.

The L2 shoulder region is located on the outer side of the tyre, whereas the shoulder region L3 is located on the inner side of the tyre.

The central region L1 takes up a substantial part of the tread band 7.

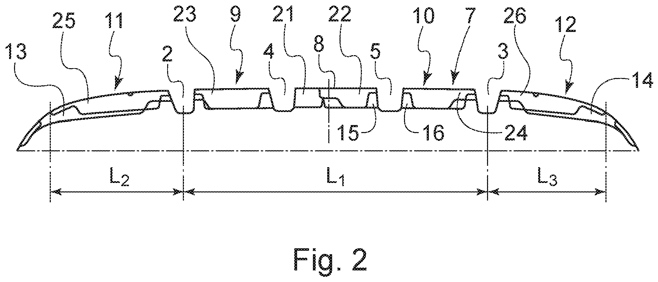

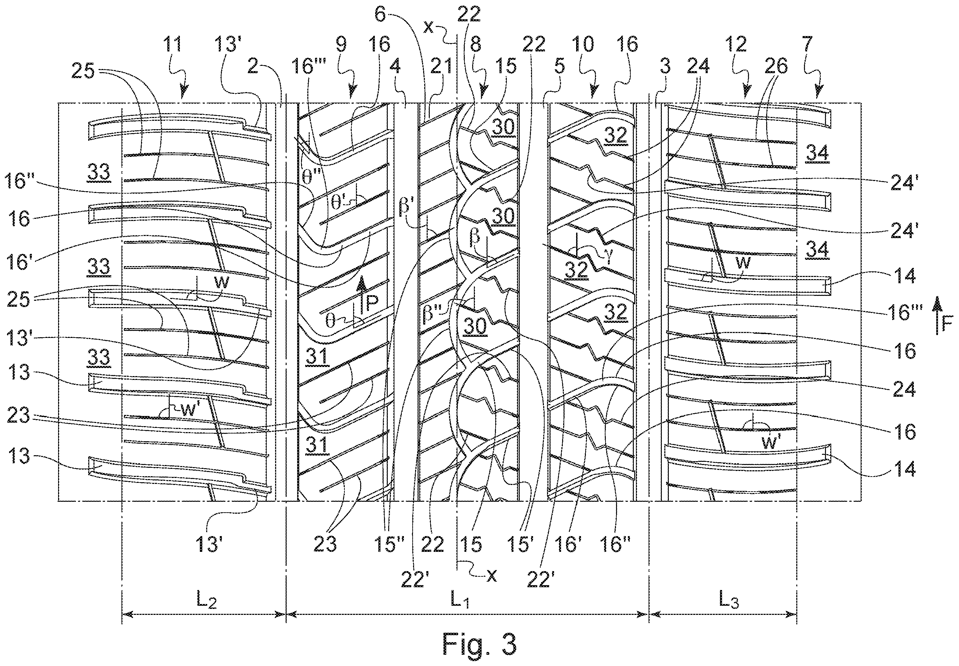

The central region L1 may, in fact, have a width greater than or equal to 40%, preferably greater than or equal to 50%, of the effective width of the tread band 7, i.e. the width of the portion of the tread band 7 intended to come into contact with the ground. In figures 2 and 3 this portion is substantially defined by the two dash-dotted lines passing through the axial ends of the tread band 7 itself.

The shoulder region L2 of the tread band 7 has essentially the same width as the shoulder region L3.

The shoulder regions L2, L3 each have a width smaller than 30% of the effective width of the tread band 7. Preferably, the shoulder regions L2, L3 each have a width smaller than 25% of the effective width of the tread band 7.

The first circumferential groove 2 delimits in axial direction the first shoulder region L2 relative to the central region L1 of the tread 7, whereas the first circumferential groove 3 delimits in axial direction the second shoulder region L3 relative to the central region L1.

The second grooves 4,5 are arranged in the central region L1 so as to identify a central rib 8 and two rows 9,10 of lateral blocks 31,32 described in more detail below.

The first 2,3 and the second 4,5 circumferential grooves have a substantially straight course in the circumferential direction, preferably along the whole circumferential development of the tyre.

The first 2,3 and second 4,5 circumferential grooves are mainly responsible for draining and removing water, particularly from the central region L1 of the tyre.

For this purpose, the first 2,3 and second 4,5 circumferential grooves preferably have a maximum depth comprised between about 5 mm and about 10 mm, more preferably between about 8 mm and about 10 mm.

For the same reason, the first 2,3 and the second 4,5 circumferential grooves have a width comprised between about 8 mm and 14 mm.

Still referring to the embodiment shown in the figures, the first 2,3 and second 4,5 circumferential grooves are shaped so as to have a straight section of substantially trapezoidal form.

The central region L1 is designed to maintain a high amount of rubber on the ground at the most central portion, i.e. near the equatorial plane X-X, of tyre 1, while keeping the stiffness of tread band 7 as uniform as possible in the various annular portions thereof. For this purpose, the central region L1 has a void-to-rubber ratio smaller than about 0.40, preferably smaller than about 0.36. Preferably, the central region L1 has a void-to-rubber ratio greater than about 0.25, preferably greater than about 0.28.

The central region L1 has a central rib 8 comprising a row of central blocks 30, and two rows 9,10 of lateral blocks 31,32 located opposite to each other relative to the central rib 8.

In the embodiment shown in the figures, the central rib 8 is located substantially across the equatorial plane X-X and is delimited in the axial direction by the two second circumferential grooves 4,5.

The central rib 8 has a plurality of central blocks 30, which are delimited in a circumferential direction by first curvilinear grooves 15, and an annular portion 6 provided with a plurality of first sipes 21.

The central rib 8 thus lacks annular portions having a void-to-rubber ratio substantially equal to zero.

Each central block 30 is separated from the circumferentially subsequent central block 30 by a first curvilinear groove 15.

The first curvilinear grooves 15 have a substantially straight first segment 15', which is inclined relative to a direction parallel to the equatorial plane X-X, and a curvilinear second segment 15", arranged in a substantially circumferential direction.

In the embodiment shown in the figures the substantially straight first segment 15' is inclined relative to a direction parallel to the equatorial plane X-X so as to form an angle β greater than 45°, preferably comprised between 50° and 80°, more preferably between 50° and 70°.

Each central block 30 of the central rib 8 is thus delimited in circumferential direction by two first segments 15' of two circumferentially subsequent first curvilinear grooves 15, and in axial direction by a second segment 15" of a first curvilinear groove 15 and by the second circumferential groove 5.

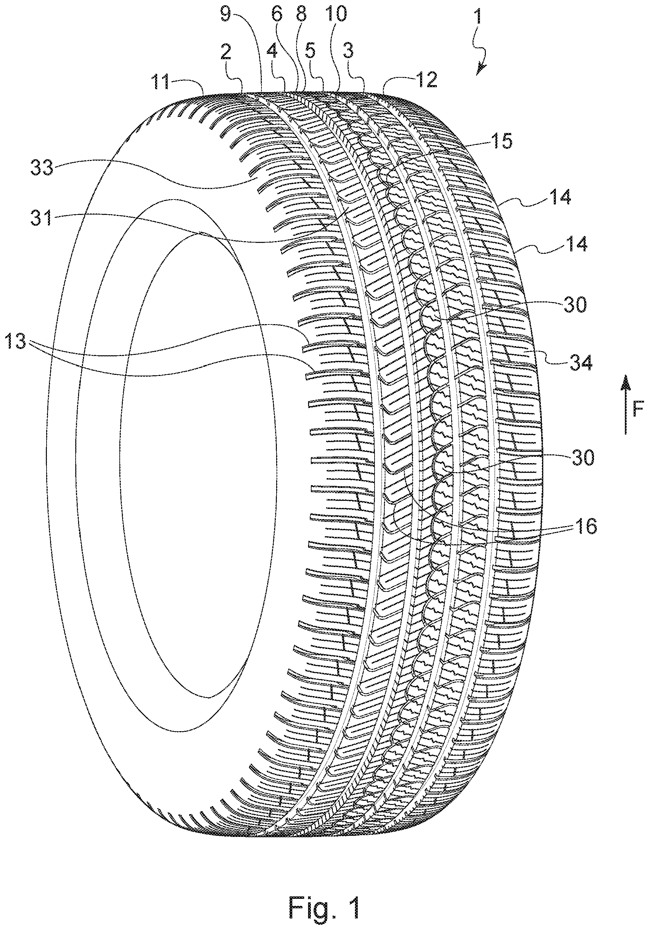

In the embodiment shown in Figures 1-3, the first curvilinear grooves 15 have a constant width along their extension. Preferably, the first curvilinear grooves 15 have a width smaller than or equal to about 5 mm, preferably smaller than or equal to about 4 mm.

Preferably, the first curvilinear grooves 15 have a width greater than or equal to about 2 mm.

Preferably, the first curvilinear grooves 15 do not have a constant depth along their extension, rather they have a maximum depth at their central portion and at least one section reduction at at least one end thereof.

Preferably, the first curvilinear grooves 15 have a maximum depth greater than about 5 mm.

Preferably, the first curvilinear grooves 15 have a maximum depth smaller than about 10 mm.

Preferably, the central blocks 30 of the central rib 8 have substantially a same shape. Preferably, the central blocks 30 of the central rib 8 have a shark fin shape.

The annular portion 6, axially in side-by-side relationship with the row of central blocks 30, is delimited in the axial direction by the second circumferential groove 4 and the curvilinear second segments 15" of the first curvilinear grooves 15.

The annular portion 6 has a void-to-rubber ratio greater than 0.05, preferably greater than 0.06.

The annular portion 6 has a void-to-rubber ratio smaller than 0.10.

For this purpose, the annular portion 6 has a plurality of first sipes 21 extending between the second circumferential groove 4 and the first curvilinear grooves 15.

The void-to-rubber ratio of the annular portion 6 results from the first 21 sipes alone.

In the embodiment shown in the figures, the first sipes 21 extend axially over the full width of the annular portion 6.

In other words, the first sipes 21 extend from the second circumferential groove 4 up to the first curvilinear grooves 15.

Preferably, the first 21 sipes have a straight course substantially along their whole extension.

The first sipes 21 extend in the first annular portion 6 substantially parallel to one another.

The first sipes 21 have a minimum distance form one another in circumferential direction greater than or equal to 6 mm.

The first sipes 21 have an inclination β' relative to the equatorial plane X-X greater than 45°, preferably comprised between 50° and 80°, more preferably between 50° and 70°. The first sipes 21 preferably have a maximum width smaller than about 1 mm.

Preferably, the first sipes 21 do not have a constant depth along their extension, rather, as better shown in figure 2, they have a maximum depth at the second circumferential groove 4 and a reduced depth at the first curvilinear grooves 15.

Preferably, the first sipes 21 have a maximum depth greater than about 5 mm. The first sipes 21 have a maximum depth smaller than about 10 mm.

Preferably, the maximum depth of the first sipes 21 is smaller than the maximum depth of the circumferential grooves 2, 3, 4, 5.

In order to improve behavior on snow, the central blocks 30 also have sipes, in particular a plurality of second sipes 22.

Some of the second sipes 22 extend from the second circumferential groove 5 to the first curvilinear grooves 15.

Preferably, in the embodiment shown in figures 1-3, there are three second sipes 22 in each central block 30.

Preferably, the number of second sipes 22 in each central block 30 of the central rib 8 is constant.

Preferably, the second sipes 22 may have a straight course, leaving out a short central segment 22' having a zigzagging course.

The second sipes 22 have a main inclination, i.e. the inclination leaving out the zigzagging the central segment 22', which is opposite to the inclination of the straight first segment 15' of the first curvilinear grooves 15. In detail, in the central blocks 30, the second sipes 22, leaving out the short zigzagging central segment 22', extend parallel to each other, but they are oppositely inclined relative to the direction of the straight first segment 15' of the first curvilinear grooves 15.

With reference to the embodiment shown in figures 1-3, the second sipes 22 have an inclination β" relative to the equatorial plane X-X greater than 45°, preferably comprised between 50° and 80°, more preferably between 50° and 70°.

Preferably, the second sipes 22 are oppositely inclined relative to the first sipes 21.

The second sipes 22 have a maximum width smaller than about 1 mm.

Preferably, the second sipes 22 do not have a constant depth along their extension, rather, as better shown in figure 2, they have a maximum depth at their central portion and at least two respective depth reductions at their ends.

Preferably, the second sipes 22 have a maximum depth greater than about 5 mm. Preferably, the second sipes 22 have a maximum depth smaller than about 10 mm.

Preferably, the maximum depth of the second sipes 22 is smaller than the maximum depth of the circumferential grooves 2, 3, 4, 5.

Preferably, the second sipes 22 have a minimum distance from one another in circumferential direction greater than or equal to 6 mm.

The circumferential rows 9, 10 of lateral blocks 31, 32 are arranged axially outwards relative to the central rib 8, and are respectively delimited by the circumferential grooves 2, 4 and 3, 5.

Each circumferential row 9,10 has a plurality of lateral blocks 31,32 and a plurality of second curvilinear grooves 16. In each circumferential row 9,10, each lateral block 31,32 is separated from the circumferentially subsequent lateral block 31,32 by a second curvilinear groove 16.

Preferably, the lateral blocks 31,32 of the circumferential rows 9,10 have substantially the same shape, leaving out their orientation.

Each lateral block 31 of the circumferential row 9 is delimited in circumferential direction by two second curvilinear grooves 16 and in axial direction by two segments respectively of the first circumferential groove 2 and the second circumferential groove 4.

Each lateral block 32 of the circumferential row 10 is delimited in circumferential direction by two second curvilinear grooves 16 and in axial direction by two segments respectively of the first circumferential groove 3 and the second circumferential groove 5.

Each second curvilinear groove 16 extends in a substantially axial direction over at least 95% of the respective row 9,10 of lateral blocks 31,32.

Preferably, each second transverse groove 16 extends over the full width of the respective row of blocks 9,10 where it is located.

In other words, in the preferred embodiment shown in Figs. 1-3, each second curvilinear groove 16 extends from the axially outermost first circumferential groove 2,3 to the axially innermost second circumferential groove 4,5.

The choice of having a through second curvilinear groove 16 allows avoiding the presence of an annular portion with a zero void-to-rubber ratio in the circumferential row 9,10 of lateral blocks 31,32, so as not to create a stiffness discontinuity within the same annular portion of tread band 7, to the advantage of tyre wear.

Each second curvilinear groove 16 has a substantially straight first segment 16", a substantially straight second segment 16", and a curvilinear connecting segment 16‴, interposed between the substantially straight first segment 16' and second segment 16". The substantially straight second segment 16" has an extension smaller than or equal to 1/3 of the extension of the substantially straight first segment 16'.

The first straight segment 16' has an extension greater than or equal to 50% of the width of the row of blocks 9,10 where it is located.

The curvilinear connecting segment 16‴ is defined by an arc of a circle having a bending radius comprised in the range of 2 to 7 mm, preferably 4 to 6 mm.

In the circumferential row 9 of lateral blocks 31, the curvilinear connecting segment 16‴ connects the substantially straight first segment 16' with the substantially straight second segment 16" so as to define a concavity oriented in a first circumferential direction, indicated by an arrow P in Fig. 3. The first circumferential direction P is the same as the rolling direction of the tyre, indicated by an arrow F in Fig. 3. In the circumferential row 10 of lateral blocks 32, the curvilinear connecting segment 16‴ connects the substantially straight first segment 16' with the substantially straight second segment 16" so as to define a concavity oriented in a second circumferential direction, opposite to the first direction of the curvilinear connecting segment 16‴ of the second curvilinear grooves 16 of the circumferential row 9 of lateral blocks 31.

Preferably, the second curvilinear grooves 16 of the circumferential rows 9,10 are substantially the same, leaving out the orientation of the respective curvilinear connecting segment 16'", and for this reason the description of the second curvilinear grooves 16 of the circumferential row 9 shall also apply to the second curvilinear grooves 16 of the circumferential row 10.

The substantially straight first segment 16' of the second curvilinear grooves 16 is oppositely inclined relative to the substantially straight second segment 16".

Preferably, the substantially straight first segment 16' is more inclined than the straight second segment 16".

Preferably, the straight first segment 16' forms an angle θ with a direction parallel to the equatorial plane X-X greater than or equal to 45°, more preferably comprised between 50° and 80°, even more preferably between 50° and 70°.

The straight second segment 16" forms an angle θ" relative to the equatorial plane X-X smaller than or equal to 45°, preferably smaller than or equal to 40°.

In the embodiment shown in figures 1-3, the second curvilinear grooves 16 have a constant width along their extension. Preferably, the second curvilinear grooves 16 have a width smaller than or equal to about 5 mm, preferably smaller than or equal to 4 mm.

Preferably, the second curvilinear grooves 16 have a width greater than or equal to about 2 mm.

Preferably, the second curvilinear grooves 16 do not have a constant depth along their extension, rather, as better shown in figure 2, they have a maximum depth at their central portion and at least one section reduction at their ends.

Preferably, the second curvilinear grooves 16 have a maximum depth greater than about 5 mm.

The second curvilinear grooves 16 have a maximum depth smaller than about 10 mm. In order to improve behavior on snow, each circumferential row of blocks 9, respectively 10, has a plurality of third 23, respectively fourth 24, sipes.

The third sipes 23 extend axially over at least 70% of the width of the circumferential row 9 of lateral blocks 31.

In the embodiment shown in figures 1-3, there are two third sipes 23 in each lateral block 31.

Preferably, the number of third sipes 23 in each lateral block 31 of the circumferential row 9 of lateral blocks 31 is constant.

Preferably, the third sipes 23 have a straight course substantially along their whole extension.

Preferably, the third sipes 23 have substantially the same inclination as the first sipes 21. In the embodiment shown in figures 1-3, the third sipes 23 are located on extensions of the first sipes 21.

In order to improve the traction and braking features when cornering, in particular on snow-covered roads, the inclination of the third sipes 23 substantially follows the inclination of the straight first segment 16' of the second curvilinear grooves 16. In detail, in the circumferential row 9 of lateral blocks 31, the third sipes 23 extend parallel to one another and in a direction substantially parallel to the direction of the straight first segment 16' of the second curvilinear grooves 16.

With reference to the embodiment shown in figures 1-3, the third sipes 23 have an inclination θ' relative to the equatorial plane X-X greater than 45°, preferably comprised between 50° and 80°, more preferably between 50° and 70°.

Preferably, the third sipes 23 have a maximum width smaller than about 1 mm.

The third sipes 23 do not have a constant depth along their extension, rather, as better shown in figure 2, they have a maximum depth at their central portion and at least two respective depth reductions at their ends.

Preferably, the third sipes 23 have a maximum depth greater than about 5 mm. The third sipes 23 have a maximum depth smaller than about 10 mm.

Preferably, the maximum depth of the third sipes 23 is smaller than the maximum depth of the circumferential grooves 2,3,4,5.

Preferably, the third sipes 23 have a minimum distance from one another in circumferential direction greater than or equal to 6 mm.

Still in order to improve the performance on snow, the circumferential row 10 of lateral blocks 32 has a plurality of fourth sipes 24.

The fourth sipes 24 extend axially over at least 70% of the width of the circumferential row 10 of lateral blocks 32.

In the embodiment shown in figures 1-3, there are three fourth sipes 24 in each lateral block 32.

Preferably, the number of fourth sipes 24 in each lateral block 32 of the circumferential row 10 of lateral blocks 32 is constant.

Preferably, the fourth sipes 24 may have, leaving out a short central segment 24', a straight course substantially along their whole extension.

In the embodiment shown in figures 1, 3 each lateral block 32 of the circumferential row 10 of lateral blocks 32 has three fourth blocks 24, two of which have a short central segment 24' having a zigzagging course.

Still in order to improve the traction and braking features when cornering, particularly on snow-covered roads, the main inclination of the fourth sipes 24, i.e. the inclination leaving out the central segment 24' having a zigzagging course, substantially follows the inclination of the second sipes 22. In more detail, in the circumferential row 10 of lateral blocks 32, the fourth sipes 24 extend, leaving out the short central segment 24' having a zigzagging course, parallel to each other and along a direction oppositely inclined relative to the direction of the straight first segment 16' of the second curvilinear grooves 16.

With reference to the embodiment shown in figures 1-3, the fourth sipes 24 have an inclination γ relative to the equatorial plane X-X greater than 45°, preferably comprised between 50° and 80°, more preferably between 50° and 70°.

In order to balance the behavior of the left and right side of the tyre when driving on snow-covered roads, the fourth sipes 24 are oppositely inclined relative to the third sipes 23.

Preferably, the fourth sipes 24 have a maximum width smaller than about 1 mm.

The fourth sipes 24 do not have a constant depth along their extension, rather, as better shown in figure 2, they have a maximum depth at their central portion and at least two respective depth reductions at their ends.

Preferably, the fourth sipes 24 have a maximum depth greater than about 5 mm. Preferably, the fourth sipes 24 have a maximum depth smaller than about 10 mm.

Preferably, the maximum depth of the fourth sipes 24 is smaller than the maximum depth of the circumferential grooves 2,3,4,5.

Preferably, the fourth sipes 23 have a minimum distance from one another in circumferential direction greater than or equal to 6 mm.

With reference to the shoulder regions, in order to make them stiffer than the central region L1 of the tread 7 of the tyre, the first shoulder region L2 and/or the second shoulder region L3 have a void-to-rubber ratio smaller than about 0.35, preferably smaller than about 0.30.

Preferably, the first shoulder region L2 and the second shoulder region L3 have a void-to-rubber ratio greater than about 0.15, preferably greater than about 0.18.

In order to achieve such void-to-rubber ratio, the shoulder regions comprise a plurality of shoulder transverse grooves 13,14 and, preferably, a plurality of fifth and sixth sipes 25, 26.

In detail, each shoulder region L2, L3 comprises a plurality of circumferentially repeating shoulder transverse grooves 13,14.

The shoulder transverse grooves 13,14 extend substantially parallel to one another respectively in the shoulder regions L2,L3.

In particular, close to the first circumferential grooves 2,3 corresponding segments of two circumferentially adjacent shoulder transverse grooves 13,14 have a mutual distance of at least about 20 mm.

The shoulder transverse grooves 13,14 extend axially over at least 70% of the width of the respective shoulder region L2, L3.

Preferably, the shoulder transverse grooves 13,14 extend axially over at least 90% of the width of the respective shoulder region L2, L3.

In the embodiment shown in figures 1-3, the shoulder transverse grooves 13,14 extend from a first end, located at a respective edge of the tread band 7, up to one of the first two circumferential grooves 2,3.

The shoulder transverse grooves 13,14 have a width greater than or equal to about 3 mm. Preferably, the shoulder transverse grooves 13,14 have a width smaller than about 8 mm. For example, they may have a width between about 3 and about 6 mm. In the embodiment shown in figures 1,3, the shoulder transverse grooves 14 of the inner shoulder region L3 have a constant width substantially along their whole extension, whereas the shoulder transverse grooves 13 of the outer shoulder region L2 have a variable width along their extension.

In particular, at the first circumferential groove 2, the shoulder transverse grooves 13 have a segment 13' having a reduced width

The reduced width segment 13' has an extension smaller than 30% of the width of the first shoulder region L2.

Preferably, the width of the reduced width segment 13' is approximately half the width of the remaining segment of the shoulder transverse groove 13.

Each shoulder transverse groove 13,14 has a maximum depth of at least about 3 mm and smaller than about 10 mm. Preferably, each shoulder transverse groove 13,14 has a maximum depth comprised between about 4 mm and about 8 mm.

Preferably, each shoulder transverse groove 13,14 has a depth which is not constant and decreases, preferably gradually, moving towards the axially outer edges of the tyre.

The shoulder transverse grooves 13,14 extends in a transverse direction or in a direction slightly inclined relative to the axial direction.

In particular, the extension direction of the grooves 13,14 respectively forms an angle ω with the equatorial plane X-X comprised between 60° and 90°, preferably between 75° and 90°.

The number of shoulder transverse grooves 13 of shoulder region L2 is substantially equal to the number of shoulder transverse grooves 14 of shoulder region L3.

The shoulder transverse grooves 13 of the shoulder region L2 are preferably circumferentially staggered relative to the shoulder transverse grooves 14 of the shoulder region L3.

In order to improve the behavior on snow, each shoulder region has a plurality of fifth and sixth sipes 25,26. In detail, the shoulder region L2 has a plurality of fifth sipes 25, whereas the remaining shoulder region L3 has a plurality of sixth sipes 26.

In each shoulder region L2, L3 the fifth and sixth sipes 25,26 extend axially over at least 70% of the width of the shoulder region L2, L3 where they are located.

Preferably, the fifth and sixth sipes 25,26 extend axially over at least 90% of the width of the respective shoulder region L2, L3 where they are located.

In order to improve traction and braking features during straight driving, in particular on snow-covered roads, the extension of the fifth and sixth sipes 25, 26 substantially follows the extension of the shoulder transverse grooves 13,14. In detail, in each shoulder region L2, L3 the fifth and sixth sipes 25,26 extend parallel to one another and in a direction substantially parallel to the direction of the shoulder transverse grooves 13,14.

With reference to the embodiment shown in figures 1-3, the fifth and sixth sipes 25,26 have an inclination ω' with respect to the equatorial plane X-X between 60° and 90°, preferably between 75° and 90°.

Preferably, the fifth and sixth sipes 25,26 have a maximum width smaller than about 1 mm.

Preferably, the fifth and sixth sipes 25,26 do not have a constant depth along their extension, rather, as better shown in figure 2, they have a maximum depth at their central portion and at least two respective section reductions at their ends.

Preferably, the fifth and sixth sipes 25,26 have a maximum depth greater than about 4 mm. The fifth and sixth sipes 25,26 have a maximum depth smaller than about 10 mm. Preferably, the maximum depth of the fifth and sixth sipes 25,26 is smaller than the maximum depth of the circumferential grooves 2,3,4,5.

Preferably, the fifth and/or sixth sipes 25,26 have a minimum distance from one another in circumferential direction greater than or equal to 6 mm.

In a preferred embodiment, the fifth and sixth sipes 25,26 are formed as described in patent application WO 2017/212399, to the same Applicant, incorporated herein by reference.

Tyres of size 255/55 R18, model Scorpion Verde AS+, currently marketed by the Applicant (Comparison), were compared with tyres of the same size and having a tread pattern according to the embodiment of the invention shown in the figures (Invention). Both tyres were fitted with an inflation pressure of 2.4 bar.

A Volvo XC 90 car was first equipped with four tyres made according to the invention and then with four comparison tyres.

Tests of the running behavior, both on dry and wet road terrain, and on snow- and ice-cowered terrain, as well as tests with instruments for measuring rolling resistance and braking space on dry, wet and snow-covered ground, were performed.

The running behavior test, on road terrain, with dry, wet and snow-cowered ground, is performed on predetermined paths, typically tracks closed to traffic. By simulating some characteristic maneuvers (such as change of lane, overtaking, slalom between traffic cones, entering and leaving a bend) at a constant speed, as well as as well as under acceleration and deceleration, the test driver assesses the performance of the tyre by giving a numerical evaluation of the behavior of the latter during the aforementioned maneuvers.

Tests, in particular subjective test, i.e. test based on the perception of the test driver, of internal and external noise were also carried out.

The results of the tests are shown in Table I, where the values of the ratings are expressed as percentages, setting the values for the comparison tyre equal to 100. As to the running behavior tests and subjective noise estimations, the rating scale represents a subjective assessment made by the test driver testing the compared sets in sequence.

In the case of the mileage test, a value greater than 100 as compared to the comparison tyre indicates a percentual improvement in terms of lower tread wear (measured as recess depth) on a mixed route comprising distances on motorways, highways, secondary roads and urban roads.

In the case of the rolling resistance measurement, a value greater than 100 as compared to the comparison tyre indicates a lower rolling resistance (proportionally, taking the rolling resistance of the comparison tyre as a reference at 100).

In the case of the braking distance measurement, a value greater than 100 as compared to the comparison tyre represents a shorter braking distance on the relevant ground.

**Table I**

| | Comparison | Invention |
|---|---|---|
| Subjective external noise | 100 | 100 |
| Subjective internal noise | 100 | 100 |
| Behavior on snow | 100 | 105 |
| Rolling resistance | 100 | 103 |
| Mileage | 100 | 140 |
| Behavior on dry ground | 100 | 105 |
| Behavior on wet ground | 100 | 100 |
| Braking on snow | 100 | 105 |
| Traction on snow | 100 | 115 |
| Braking on dry ground | 100 | 100 |
| Braking on wet ground | 100 | 100 |

The tyre of the invention thus showed an overall improvement, and in particular a very pronounced improvement in terms of mileage, braking, traction and behavior on snow. Various modifications may be made to the embodiments herein described in detail, while remaining within the scope of protection of the invention, as defined by the following claims.

## Claims

1. Car tyre (1) having a tread band (7) comprising a central region (L1), extending across an equatorial plane (X-X), and two shoulder regions (L2, L3), separated from the central region by two first circumferential grooves (2,3);
- said central region (L1) having at least one central rib (8), comprising a plurality of central blocks (30), and at least two rows (9,10) of lateral blocks opposed to each other relative to said central rib (8) and comprising a plurality of lateral blocks (31,32);
- said central rib (8) being axially delimited by two second circumferential grooves (4,5) and said plurality of central blocks (30) being delimited by a respective plurality of first curvilinear grooves (15);
- each first curvilinear groove (15) extending between a second circumferential groove (4,5) and a circumferentially subsequent first curvilinear groove (15) so as to form one of said central blocks (30);
- the lateral blocks (31,32) of each row (9,10) of lateral blocks being separated from one another by means of a plurality of second curvilinear grooves (16) distributed along the whole circumferential development of the tyre and having an extension equal to at least 95% of the width of the respective row (9,10) of lateral blocks; **characterized in that**:
- each of said second curvilinear grooves (16) comprises a substantially straight first segment (16') inclined relative to a direction parallel to said equatorial plane (X-X) so as to form an angle θ greater than or equal to 45°, a substantially straight second segment (16") oppositely inclined relative to said first segment (16') and a curvilinear connecting segment (16‴) extending between said first (16') and said second (16") segments;
- said tread band (7) further comprises a plurality of sipes (21,22,23,24,25) comprising a plurality of first sipes (21) located in said central rib (8) between said first curvilinear grooves (15) and one of said second circumferential grooves (4,5).

2. Tyre (1) according to claim 1, **characterized in that** said second curvilinear grooves (16) have an extension equal to 100% of the width of the respective row (9,10) of lateral blocks (31,32).

3. Tyre (1) according to claim 1, **characterized in that** said rows (9,10) of lateral blocks or said central rib lack annular portions having a void-to-rubber ratio equal to zero.

4. Tyre (1) according to any one of claims 1 to 3, **characterized in that** said second segment (16") has an extension smaller than or equal to 1/3 of the extension of said first segment (16').

5. Tyre (1) according to any one of claims 1 to 4, **characterized in that** said angle θ is comprised between 50° and 80°.

6. Tyre (1) according to any one of claims 1 to 5, **characterized in that** said central rib (8) comprises an annular portion (6) having a void-to-rubber ratio greater than 0,05, delimited in axial direction by one of said second circumferential grooves (4) and by said plurality of first curvilinear grooves (15).

7. Tyre (1) according to claim 6, **characterized in that** said annular portion (6) comprises only said plurality of first sipes (21).

8. Tyre (1) according to claim 6 or 7, **characterized in that** said first sipes (21) extend with a substantially straight course between said second circumferential groove (4) and said first curvilinear grooves (15).

9. Tyre (1) according to any one of claims 7 or 8, **characterized in that** said first sipes (21) are inclined relative to said equatorial plane (X-X) so as to form an angle β' greater than 45°, preferably comprised between 50° and 80°.

10. Tyre (1) according to any one of claims 1 to 9, **characterized in that** said first curvilinear grooves (15) comprise a substantially straight first segment (15') inclined relative to a direction parallel to said equatorial plane (X-X) so as to form an angle β greater than 45°, preferably comprised between 50° and 80°.

11. Tyre (1) according to any one of claims 1 to 10, **characterized in that** said first curvilinear grooves (15) comprise a curvilinear second segment (15"), arranged in a substantially circumferential direction.

12. Tyre (1) according to any one of claims 1 to 11, **characterized in that** said central blocks (30) comprise a plurality of second sipes (22), wherein at least some of said second sipes (22) extend between one of said second circumferential grooves (5) and said first curvilinear circumferential grooves (15).

13. Tyre (1) according to any one of claims 1 to 12, **characterized in that** one of said rows (9) of lateral blocks (31) comprises a plurality of third sipes (23) and another of said rows (10) of lateral blocks (32) comprises a plurality of fourth sipes (24).

14. Tyre (1) according to any one of previous claims 1 to 13, **characterized in that** said first (L1) and second (L2) shoulder regions comprise rows (11,12) of shoulder blocks (33,34) separated from one another by shoulder transverse grooves (13,14), said shoulder transverse grooves (13, 14) preferably having a width greater than or equal to 3 mm, and wherein one of said rows (11) of shoulder blocks (33) preferably comprises a plurality of fifth sipes (25) and the other of said rows (12) of shoulder blocks (34) preferably comprises a plurality of sixth sipes (26).

15. Tyre (1) according to any one of claims 1 to 14, **characterized in that** in a row (9) of lateral blocks (31), said curvilinear connecting segment (16‴) connects said first segment (16') with said second segment (16") so as to define a concavity oriented in a first circumferential direction, whereas in the other row (10) of lateral blocks (32) said curvilinear connecting segment (16‴) connects said first segment (16') with said second segment (16") so as to define a concavity oriented in a second circumferential direction opposite to said first circumferential direction.

## Patentansprüche

1. Autoreifen (1) mit einem Laufflächenband (7) umfassend einen zentralen Bereich (L1), der sich über eine Äquatorialebene (X-X) erstreckt, und zwei Schulterbereiche (L2, L3), die vom zentralen Bereich durch zwei erste Umfangsrillen getrennt sind (2, 3);
- wobei der zentrale Bereich (L1) mindestens eine zentrale Leiste (8) aufweist, eine Vielzahl von zentralen Blöcken (30) und mindestens zwei Reihen (9, 10) von seitlichen Blöcken umfasst, die einander relativ zu der zentralen Leiste gegenüberliegen (8), und eine Vielzahl von seitlichen Blöcken (31, 32) umfasst;
- wobei die zentrale Leiste (8) axial durch zwei zweite Umfangsrillen (4, 5) begrenzt wird und die Vielzahl von zentralen Blöcken (30) durch eine entsprechende Vielzahl erster krummliniger Rillen (15) begrenzt wird;
- wobei sich jede erste krummlinige Rille (15) zwischen einer zweiten Umfangsrille (4, 5) und einer in Umfangsrichtung anschließenden ersten krummlinigen Rille (15) erstreckt, um einen der zentralen Blöcke (30) zu bilden;
- wobei die seitlichen Blöcke (31, 32) in jeder Reihe (9, 10) von seitlichen Blöcken durch eine Vielzahl von zweiten krummlinigen Rillen (16), die entlang der gesamten Umfangsabwicklung des Reifens verteilt sind und eine Ausdehnung aufweisen, die mindestens 95 % der Breite der jeweiligen Reihe (9, 10) von seitlichen Blöcken entspricht, voneinander getrennt sind; **dadurch gekennzeichnet, dass**:
- jede der zweiten krummlinigen Rillen (16) ein im Wesentlichen gerades erstes Segment (16'), das relativ zu einer Richtung parallel zu der Äquatorialebene (X-X) geneigt ist, um einen Winkel θ größer oder gleich 45° zu bilden, ein im Wesentlichen gerades zweites Segment (16"), das relativ zu dem ersten Segment (16') entgegengesetzt geneigt ist, und ein krummliniges Verbindungssegment (16‴), das sich zwischen dem ersten (16') und dem zweiten (16") Segment erstreckt, umfasst;
- wobei das Laufflächenband (7) ferner eine Vielzahl von Lamellen (21, 22, 23, 24, 25) umfassend eine Vielzahl von ersten Lamellen (21), die in der zentralen Leiste (8) zwischen den ersten krummlinigen Rillen (15) und einer der zweiten Umfangsrillen (4, 5) angeordnet sind, umfasst.

2. Reifen (1) nach Anspruch 1, **dadurch gekennzeichnet, dass** die zweiten krummlinigen Rillen (16) eine Ausdehnung haben, die 100 % der Breite der jeweiligen Reihe (9, 10) von seitlichen Blöcken (31, 32) entspricht.

3. Reifen (1) nach Anspruch 1, **dadurch gekennzeichnet, dass** die Reihen (9, 10) von seitlichen Blöcken oder die zentrale Leiste keine ringförmigen Abschnitte mit einem Hohlraum-zu-Gummi-Verhältnis von Null aufweisen.

4. Reifen (1) nach einem der Ansprüche 1 bis 3, **dadurch gekennzeichnet, dass** das zweite Segment (16") eine Ausdehnung aufweist, die kleiner oder gleich 1/3 der Ausdehnung des ersten Segments (16') ist.

5. Reifen (1) nach einem der Ansprüche 1 bis 4, **dadurch gekennzeichnet, dass** der Winkel θ zwischen 50° und 80° liegt.

6. Reifen (1) nach einem der Ansprüche 1 bis 5, **dadurch gekennzeichnet, dass** die zentrale Leiste (8) einen ringförmigen Abschnitt (6) mit einem Hohlraum-zu-Gummi-Verhältnis von mehr als 0,05 umfasst, begrenzt in axialer Richtung durch eine der zweiten Umfangsrillen (4) und durch die Vielzahl an ersten krummlinigen Rillen (15).

7. Reifen (1) nach Anspruch 6, **dadurch gekennzeichnet, dass** der ringförmige Abschnitt (6) nur die Vielzahl an ersten Lamellen (21) umfasst.

8. Reifen (1) nach Anspruch 6 oder 7, **dadurch gekennzeichnet, dass** sich die ersten Lamellen (21) mit einem im Wesentlichen geraden Verlauf zwischen der zweiten Umfangsrille (4) und den ersten krummlinigen Rillen (15) erstrecken.

9. Reifen (1) nach einem der Ansprüche 7 oder 8, **dadurch gekennzeichnet, dass** die ersten Lamellen (21) relativ zur Äquatorialebene (X-X) geneigt sind, um einen Winkel β' von mehr als 45°, vorzugsweise zwischen 50° und 80°, zu bilden.

10. Reifen (1) nach einem der Ansprüche 1 bis 9, **dadurch gekennzeichnet, dass** die ersten krummlinigen Rillen (15) ein im Wesentlichen gerades erstes Segment (15') umfassen, das relativ zu einer Richtung parallel zur Äquatorialebene (X-X) geneigt ist, um einen Winkel β von mehr als 45°, vorzugsweise zwischen 50° und 80°, zu bilden.

11. Reifen (1) nach einem der Ansprüche 1 bis 10, **dadurch gekennzeichnet, dass** die ersten krummlinigen Rillen (15) ein krummliniges zweites Segment (15") umfassen, das im Wesentlichen in Umfangsrichtung angeordnet ist.

12. Reifen (1) nach einem der Ansprüche 1 bis 11, **dadurch gekennzeichnet, dass** die zentralen Blöcke (30) eine Vielzahl von zweiten Lamellen (22) umfassen, wobei sich mindestens einige der zweiten Lamellen (22) zwischen einer der zweiten Umfangsrillen (5) und den ersten krummlinigen Umfangsrillen (15) erstrecken.

13. Reifen (1) nach einem der Ansprüche 1 bis 12, **dadurch gekennzeichnet, dass** eine der Reihen (9) von seitlichen Blöcken (31) eine Vielzahl von dritten Lamellen (23) umfasst und eine andere der Reihen (10) von seitlichen Blöcken (32) eine Vielzahl von vierten Lamellen (24) umfasst.

14. Reifen (1) nach einem der vorhergehenden Ansprüche 1 bis 13, **dadurch gekennzeichnet, dass** die ersten (L1) und zweiten (L2) Schulterbereiche Reihen (11, 12) von Schulterblöcken (33, 34) umfassen, die durch Schulterquerrillen (13, 14) voneinander getrennt sind, wobei die Schulterquerrillen (13, 14) vorzugsweise eine Breite größer oder gleich 3 mm aufweisen und wobei eine der Reihen (11) von Schulterblöcken (33) vorzugsweise eine Vielzahl von fünften Lamellen (25) umfasst und die andere der Reihen (12) von Schulterblöcken (34) vorzugsweise eine Vielzahl von sechsten Lamellen (26) umfasst.

15. Reifen (1) nach einem der Ansprüche 1 bis 14, **dadurch gekennzeichnet, dass** in einer Reihe (9) von seitlichen Blöcken (31) das krummlinige Verbindungssegment (16‴) das erste Segment (16') mit dem zweiten Segment (16") verbindet, um eine in einer ersten Umfangsrichtung ausgerichtete Konkavität zu definieren, während in der anderen Reihe (10) von seitlichen Blöcken (32) das krummlinige Verbindungssegment (16‴) das erste Segment (16') mit dem zweiten Segment (16") verbindet, um eine in einer zweiten Umfangsrichtung entgegengesetzt zur ersten Umfangsrichtung ausgerichtete Konkavität zu definieren.

## Revendications

1. Pneu d'automobile (1) présentant une bande de roulement (7) comprenant une région centrale (L1), s'étendant à travers un plan équatorial (X-X), et deux régions d'épaulement (L2, L3), séparées de la région centrale par deux premières rainures circonférentielles (2,3) ;
- ladite région centrale (L1) présentant au moins une nervure centrale (8), comprenant une pluralité de blocs centraux (30), et au moins deux rangées (9,10) de blocs latéraux opposés les uns aux autres par rapport à ladite nervure centrale (8) et comprenant une pluralité de blocs latéraux (31,32) ;
- ladite nervure centrale (8) étant délimitée axialement par deux secondes rainures circonférentielles (4,5) et ladite pluralité de blocs centraux (30) étant délimités par une pluralité respective de premières rainures curvilignes (15) ;
- chaque première rainure curviligne (15) s'étendant entre une seconde rainure circonférentielle (4,5) et une première rainure curviligne (15) circonférentiellement ultérieure de manière à former l'un desdits blocs centraux (30) ;
- les blocs latéraux (31,32) de chaque rangée (9,10) de blocs latéraux étant séparés les uns des autres au moyen d'une pluralité de secondes rainures curvilignes (16) réparties tout le long du développement circonférentiel du pneu et présentant une extension égale à au moins 95% de la largeur de la rangée respective (9,10) de blocs latéraux ; **caractérisé en ce que** :
- chacune desdites secondes rainures curvilignes (16) comprend un premier segment sensiblement droit (16') incliné par rapport à une direction parallèle audit plan équatorial (X-X) de manière à former un angle θ supérieur ou égal à 45°, un second segment sensiblement droit (16") incliné de manière opposée par rapport audit premier segment (16') et un segment de liaison curviligne (16‴) s'étendant entre ledit premier (16') et ledit second segment (16") ;
- ladite bande de roulement (7) comprend en outre une pluralité de lamelles (21,22,23,24,25) comprenant une pluralité de premières lamelles (21) situées dans ladite nervure centrale (8) entre lesdites premières rainures curvilignes (15) et l'une desdites secondes rainures circonférentielles (4,5).

2. Pneu (1) selon la revendication 1, **caractérisé en ce que** lesdites secondes rainures curvilignes (16) ont une extension égale à 100% de la largeur de la rangée respective (9,10) de blocs latéraux (31,32).

3. Pneu (1) selon la revendication 1, **caractérisé en ce que** lesdites rangées (9,10) de blocs latéraux ou ladite nervure centrale sont dépourvues de parties annulaires présentant un rapport vide sur caoutchouc égal à zéro.

4. Pneu (1) selon l'une quelconque des revendications 1 à 3, **caractérisé en ce que** ledit second segment (16") présente une extension inférieure ou égale à 1/3 de l'extension dudit premier segment (16').

5. Pneu (1) selon l'une quelconque des revendications 1 à 4, **caractérisé en ce que** ledit angle θ est compris entre 50° et 80°.

6. Pneu (1) selon l'une quelconque des revendications 1 à 5, **caractérisé en ce que** ladite nervure centrale (8) comprend une partie annulaire (6) présentant un rapport vide sur caoutchouc supérieur à 0,05, délimitée dans la direction axiale par l'une desdites secondes rainures circonférentielles (4) et par ladite pluralité de premières rainures curvilignes (15).

7. Pneu (1) selon la revendication 6, **caractérisé en ce que** ladite partie annulaire (6) comprend uniquement ladite pluralité de premières lamelles (21).

8. Pneu (1) selon la revendication 6 ou 7, **caractérisé en ce que** lesdites premières lamelles (21) s'étendent selon un parcours sensiblement rectiligne entre ladite seconde rainure circonférentielle (4) et lesdites premières rainures curvilignes (15).

9. Pneu (1) selon l'une quelconque des revendications 7 ou 8, **caractérisé en ce que** lesdites premières lamelles (21) sont inclinées par rapport audit plan équatorial (X-X) de manière à former un angle β' supérieur à 45°, de préférence compris entre 50° et 80°.

10. Pneu (1) selon l'une quelconque des revendications 1 à 9, **caractérisé en ce que** lesdites premières rainures curvilignes (15) comprennent un premier segment sensiblement droit (15') incliné par rapport à une direction parallèle audit plan équatorial (X-X) de manière à former un angle β supérieur à 45°, de préférence compris entre 50° et 80°.

11. Pneu (1) selon l'une quelconque des revendications 1 à 10, **caractérisé en ce que** lesdites premières rainures curvilignes (15) comprennent un second segment curviligne (15"), agencé dans une direction sensiblement circonférentielle.

12. Pneu (1) selon l'une quelconque des revendications 1 à 11, **caractérisé en ce que** lesdits blocs centraux (30) comprennent une pluralité de deuxièmes lamelles (22), dans lequel au moins certaines desdites deuxièmes lamelles (22) s'étendent entre l'une desdites secondes rainures circonférentielles (5) et lesdites premières rainures circonférentielles curvilignes (15).

13. Pneu (1) selon l'une quelconque des revendications 1 à 12, **caractérisé en ce que** l'une desdites rangées (9) de blocs latéraux (31) comprend une pluralité de troisièmes lamelles (23) et une autre desdites rangées (10) de blocs latéraux (32) comprend une pluralité de quatrièmes lamelles (24).

14. Pneu (1) selon l'une quelconque des revendications précédentes 1 à 13, **caractérisé en ce que** lesdites première (L1) et seconde (L2) régions d'épaulement comprennent des rangées (11,12) de blocs d'épaulement (33,34) séparés les uns des autres par des rainures transversales d'épaulement (13,14), lesdites rainures transversales d'épaulement (13, 14) présentant de préférence une largeur supérieure ou égale à 3 mm, et dans lequel l'une desdites rangées (11) de blocs d'épaulement (33) comprend de préférence une pluralité de cinquièmes lamelles (25) et l'autre desdites rangées (12) de blocs d'épaulement (34) comprend de préférence une pluralité de sixièmes lamelles (26).

15. Pneu (1) selon l'une quelconque des revendications 1 à 14, **caractérisé en ce que** dans une rangée (9) de blocs latéraux (31), ledit segment de liaison curviligne (16‴) relie ledit premier segment (16') audit second segment (16") de manière à définir une concavité orientée dans une première direction circonférentielle, tandis que dans l'autre rangée (10) de blocs latéraux (32) ledit segment de liaison curviligne (16‴) relie ledit premier segment (16') audit second segment (16") de manière à définir une concavité orientée dans une seconde direction circonférentielle opposée à ladite première direction circonférentielle.
